# EUROPEAN PATENT APPLICATION

(11) **EP 4 242 851 A1**
(43) Date of publication of application: **13.09.2023**
(21) Application number: 22161386.2
(22) Date of filing: 10.03.2022
(51) Int. Cl.: G06F 11/34, G06F 11/36

(54) **TRACING INSTRUCTIONS IN A PROCESSING UNIT**

(71) Applicant: Nokia Solutions and Networks Oy, 02610 Espoo (FI)
(72) Inventor: Perez Blanco, Ricardo, 2018 Antwerpen (BE); Alvarez Fernandez, Alfredo, 2018 Antwerpen (BE)
(74) Representative: IP HILLS NV

(57) **Abstract**

Example embodiments describe an integrated circuit (200) comprising at least one processing unit (210) for executing instructions of at least one computer program. The at least one computer program comprising at least one logging command (201) with at least one store instruction (211) to store logging data (212) within a predetermined memory region (221). The integrated circuit further comprising at least one instruction tracer circuitry (230) configurable for tracing (231) instructions executed by the at least one processing unit, and respectively coupled to the at least one processing unit. Wherein the at least one instruction tracer circuitry (230) is configured to: i) intercept the at least one store instruction (211) to the predetermined memory region (221) when executed by the at least one processing unit (210); ii) retrieve (232) the logging data (212) from the intercepted store instruction; and iii) generate a logging packet (213) comprising the logging data (212). Further example embodiments describe a method for tracing instructions executed on the integrated circuit, and a method for generating said instructions.

## Description

### Technical Field

Various example embodiments relate to tracing instructions executed by a processing unit on an integrated circuit.

### Background

Integrated circuits, ICs, can be designed for the control of specific equipment, e.g. an optical line terminal, OLT, in a passive optical network, PON. ICs can include a processing unit to execute instructions of one or more computer programs that control the specific equipment. These computer programs can include debugging features such as logging commands allowing root cause analysis of software and hardware problems. Some equipment can require a plurality of processing units working cooperatively to provide advanced features. Logging commands in computer programs can be supported by dedicated hardware that is integrated as a subsystem on the IC, which is accessible via a shared bus.

### Summary

The scope of protection sought for various embodiments of the invention is set out by the independent claims. The embodiments and features described in this specification that do not fall within the scope of the independent claims, if any, are to be interpreted as examples useful for understanding various embodiments of the invention.

Amongst others, it is an object of embodiments of the invention to provide a solution for logging commands executed by a processing unit.

This object is achieved, according to a first example aspect of the present disclosure, by an integrated circuit as defined by claim 1. In particular, an integrated circuit comprising at least one processing unit for executing instructions of at least one computer program. The at least one computer program comprising at least one logging command with at least one store instruction to store logging data within a predetermined memory region. The integrated circuit further comprising at least one instruction tracer circuitry configurable for tracing instructions executed by the at least one processing unit, and respectively coupled to the at least one processing unit. Wherein the at least one instruction tracer circuitry is configured to:
- intercept the at least one store instruction to the predetermined memory region when executed by the at least one processing unit;
- retrieve the logging data from the intercepted store instruction; and
- generate a logging packet comprising the logging data.

Logging commands in the at least one computer program can for example be loaded as store instructions of logging data into program memory for execution by the at least one processing unit. At the start of an instruction cycle, the at least one processing unit can fetch a next instruction to be executed from program memory. When this next instruction is the at least one store instruction included in a logging command, the at least one processing unit is instructed to store the logging data within the predetermined memory region.

Instruction tracer circuitries typically provide tracing of instructions executed by a processing unit, e.g. for software profiling. The at least one instruction tracer circuitry according to the present disclosure specifically traces the store instructions that store logging data into the predetermined memory region. To this end, the at least one instruction tracer circuitry is configured to detect and intercept such store instructions executed by the at least one processing unit. Upon intercepting such a store instruction, the at least one instruction tracer circuitry retrieves the logging data from the intercepted store instruction and generates a logging packet comprising the retrieved logging data.

The instruction tracer circuitry thus identifies the store instruction when it is issued by the processing unit and intercepts the logging data upon issuance of the instruction. Because of this there is no need to stall the processing unit until the store instruction has written the logging data in the predetermined memory. It is an advantage that the logging is free of resource contention as the at least one instruction tracer circuitry is directly coupled to the at least one processing unit and, thus, the logging data does not need to travel along a shared bus to dedicated hardware before the logging packet is created and the processing unit can continue.

The at least one instruction tracer circuitry thus allows to non-intrusively monitor, i.e. observe, the at least one processing unit for store instructions to the predetermined memory region. This allows non-intrusive logging of the at least one processing unit, i.e. logging with limited impact on the performance and execution time of the at least one processing unit.

According to an example embodiment, the at least one instruction tracer circuitry can further be configured to add a time reference to the logging packet.

The time reference can for example be, amongst others, a date, a timestamp, or information on the instruction cycles of the at least one processing unit. The integrated circuit can preferably comprise means configured to provide the time reference to the at least one instruction tracer circuitry. In doing so, providing the time reference can be offloaded from the computer program executed on the processing unit. This results in a reduced impact of the logging on the performance and execution time of the processing unit. Adding a time reference to the logging packet can further improve the logging by providing additional debugging features.

According to a further example embodiment, the at least one instruction tracer circuitry can further be configured to retrieve a memory address within the predetermined memory region from the intercepted store instruction, and to add the retrieved memory address to the logging packet.

The memory address can be included in the at least one logging command of the at least one computer program. Alternatively, the memory address can be provided to the at least one store instruction when compiling the code of the at least one computer program. Adding the retrieved memory address to the logging packet can further improve the logging by providing additional debugging features, e.g. by relating certain information to the memory address itself.

According to a further example embodiment, the at least one instruction tracer circuitry can further be configured to interrupt and/or initiate the generating of logging packets based on the logging data.

The generation of logging packets can be interrupted and/or initiated when the logging data includes a predetermined argument, e.g. a predetermined integer, character, string, or Boolean. The interruption can be temporary, e.g. for a fixed amount of time or for a fixed amount of instruction cycles. Alternatively, the interruption can be maintained until the at least one instruction tracer circuitry is instructed to re-initiate the generation of logging packets, e.g. by including another predetermined argument in the logging data. This allows the at least one computer program to control the generation of logging packets, i.e. the logging. This has the further advantage that the logging can be interrupted if desired, e.g. when a buffer for storing the logging data is full or to reduce power consumption.

According to a further example embodiment, the integrated circuit can further comprise at least one debugging buffer circuitry configured to store the logging packet, and the at least one instruction tracer circuitry can further be configured to forward the logging packet to the at least one debugging buffer circuitry.

The generated logging packet can thus be stored in the at least one debugging buffer circuitry provided on the integrated circuit. The debugging buffer circuitry can receive logging packets from the at least one instruction tracer circuitry at a substantial faster rate than the rate at which the received logging packets can be processed, e.g. by implementing a queue.

According to a further example embodiment, the at least one instruction tracer circuitry can further be configured to interrupt and/or initiate the forwarding and/or storing of logging packets based on the logging data.

The at least one instruction tracer circuitry can thus stop and/or start forwarding logging packets to the at least one debugging buffer circuitry after retrieving logging data that includes a predetermined argument. Alternatively, the at least one debugging buffer circuitry can stop and/or start storing forwarded logging packets. The at least one instruction tracer circuitry can instruct the at least one debugging buffer circuitry to stop storing logging packets, e.g. by including a certain instruction in the generated logging packet or by providing a control signal.

According to a further example embodiment, the integrated circuit can further comprise a plurality of instruction tracer circuitries and the at least one debugging buffer circuitry can further be configured to store logging packets that are forwarded by the plurality of instruction tracer circuitries.

In other words, at least one debugging buffer circuitry can be shared between a plurality of instruction tracer circuitries. This results in a more efficient usage of silicon area on the integrated circuit. By the plurality of instruction tracer circuitries, a plurality of processing units can be logged simultaneously on the integrated circuit.

According to a further example embodiment, the integrated circuit can further comprise at least one peripheral circuitry for outputting data from the integrated circuit, and the at least one instruction tracer circuitry and/or the at least one debugging buffer circuitry can further be configured to forward the logging packet to the at least one peripheral circuitry.

By forwarding the logging packet to the at least one peripheral circuitry, the logging packet can be provided to an external component or system that is not included on the integrated circuit, e.g. another integrated circuit or a computing system. The at least one peripheral circuitry can be a communication interface such as, for example, a transceiver-like mechanism. Outputting the logging packets allows further processing, monitoring, and/or inspecting of the generated logging packets.

According to a further example embodiment, the predetermined memory region can have at least one configurable address range.

The at least one instruction tracer circuitry can thus be configured to trace the address range wherein the logging data is stored when executing the at least one store instruction. As such, the logging data can be stored to any memory region as long as the at least one instruction tracer circuitry is configured to trace said memory region, i.e. the predetermined memory region. The predetermined memory region can further have a plurality of configurable address ranges that can, but need not, be adjacent.

According to a further example embodiment, the integrated circuit can further comprise a memory including the predetermined memory region.

The memory can for example be, amongst others, a cache, a random-access memory, RAM, a static random-access memory, SRAM, a dynamic random-access memory, DRAM, or any other primary memory known to the skilled person.

According to a further example embodiment, the memory can be directly coupled to the at least one processing unit with a guaranteed access time.

In other words, the at least one processing unit can access the memory without using a shared bus, i.e. access the memory directly. In particular, the memory can be integrated on the at least one processing unit and/or operate at a substantially similar frequency, i.e. clock speed. This results in a reduced impact of the logging on the performance and execution time of the processing unit. The directly coupled memory has the further advantage that the overhead in terms of instruction cycles is limited.

According to a further example embodiment, the predetermined memory region can be unallocated.

In other words, the store instruction does not result in an actual storage of the logging data into the predetermined memory region. In fact, the predetermined memory region can be used as an identifier for the instruction tracer circuitry that the identified store instruction is associated with a logging command.

According to a second example aspect, a method is disclosed for tracing instructions executed on an integrated circuit comprising at least one processing unit for executing instructions of at least one computer program; the at least one computer program comprising at least one logging command with at least one store instruction to store logging data within a predetermined memory region; the integrated circuit further comprising at least one instruction tracer circuitry configurable for tracing instructions executed by the at least one processing unit, and respectively coupled to the at least one processing unit; the method comprising, by the at least one instruction tracer circuitry:
- intercepting the at least one store instruction to the predetermined memory region when executed by the at least one processing unit;
- retrieving the logging data from the intercepted store instruction; and
- generating a logging packet comprising the logging data.

According to a third example aspect, a method is disclosed for generating instructions for execution on the integrated circuit according to any one of claims 1 - 11 from computer program code; the computer program code comprising at least one logging code portion for logging logging data; the method comprising:
- detecting the at least one logging code portion in the computer program code; and
- compiling the detected logging code portion to at least one store instruction to store the logging data within the predetermined memory region.

In other words, the computer program code can be converted into one or more instructions, e.g. machine code, for execution by the at least one processing unit. Upon detection of a logging code portion in the computer program code, at least one store instruction is compiled. In addition to the logging data, the logging code portion can include the predetermined memory region. Alternatively, the predetermined memory region can be provided to the at least one store instruction upon compiling of the logging code portion.

According to a further example embodiment, the store instruction can comprise a memory address within the predetermined memory region that is associated with the computer program code.

The predetermined memory region can thus be divided into regions wherein distinct computer program codes, i.e. distinct computer programs, can store logging data. In doing so, the computer program that produced the logging data, i.e. the computer program code that included the logging code portion, can be identified based on the memory address of the store instruction. It is thus an advantage that a plurality of computer programs can identifiably be logged by the instruction tracer circuitry, as each memory address within the predetermined memory region can be associated with a specific computer program. It is a further advantage that logging data of different computer programs can be stored in a shared buffer.

According to a further example embodiment, the store instruction comprises a memory address within the predetermined memory region that is associated with a logging level.

The logging level, i.e. log severity, can relate to the relative importance or urgency of the logging data. By associating a memory address with a logging level, adding a logging level to the logging data can be offloaded from the processing unit. This can result in a reduced impact of the logging on the performance and execution time of the processing unit. It is a further advantage that logging levels can allow filtering of the logging data, e.g. upon inspection of the logging data, and can allow providing an alert, e.g. when a certain action is required.

### Brief Description of the Drawings

Some example embodiments will now be described with reference to the accompanying drawings.
Fig. 1 shows a schematic block diagram of an example point-to-multipoint optical network suitable for implementing an integrated circuit, according to example embodiments;
Fig. 2 shows an example embodiment of an integrated circuit capable of tracing store instructions executed by at least one processing unit, according to example embodiments;
Fig. 3 shows an example embodiment of an integrated circuit capable of storing logging packets generated by at least one instruction tracer circuitry, according to example embodiments;
Fig. 4 shows an example embodiment of an integrated circuit capable of tracing store instructions executed by a plurality of processing units by a plurality of instruction tracer circuitries, according to embodiments; and
Fig. 5 shows steps according to a method for generating instructions from computer program code for execution on an integrated circuit according to embodiments.

### Detailed Description of Embodiment(s)

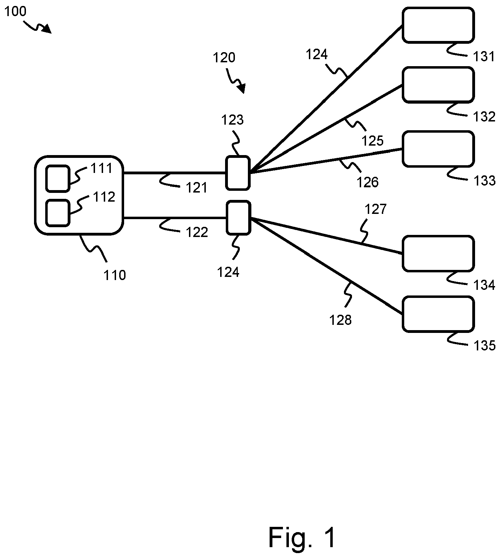

Fig.1 shows a schematic block diagram of an example point-to-multipoint optical network 100, in particular a passive optical network, PON. The optical network 100 comprises an optical line terminal 110, OLT, and a plurality of optical network units 131-135, ONUs, connected via an optical distribution network 120, ODN. In this example, the OLT 110 is coupled to five ONUs 131-135, however, the OLT 110 may be coupled to fewer or more endpoints. The ODN 120 has a tree structure comprising one or more optical feeder fibres 121, 122, one or more passive optical splitters/multiplexors 123, 124, and a plurality of optical distribution fibres or drop fibres 124-128 that connect the splitters/multiplexors 123, 124 to the respective ONUs 131-135. In the downstream, the passive optical splitters/multiplexors 123, 124 split the optical signal coming from the OLT 110 into lower power optical signals for the ONUs 131-135, while in the upstream direction, the passive optical splitters/multiplexors 123, 124 multiplexes the optical signals coming from the ONUs 131-135 into an optical signal for the OLT 110.

The ODN 120 may be a Gigabit passive optical network, GPON, according to the ITU-T G.984 standard, a 10x Gigabit passive optical network, 10G-PON, according to the ITU-T G.987 standard, a 10G symmetrical XGS-PON according to the ITU-T G.9807 standard and a four-channel 10G symmetrical NG-PON2 according to the ITU-T G.989 standard, or a next generation passive optical network, NG-PON.

Such an OLT 110 can comprise an application specific integrated circuit, ASIC, for controlling the OLT 110 by executing one or more computer programs. Therefore, the ASIC can include a processing unit 111 and at least one memory 112 including the computer program code. Some optical networks 100, e.g. next generation passive optical networks, can provide features that require utilizing a plurality of processing units 111. For example, several processing units 111 may simultaneously cooperate to control an OLT 110 in a NG-PON. The one or more computer programs running on each one of the processing units 111 can benefit from debugging features, e.g. logging, to allow root cause analysis of software and hardware problems.

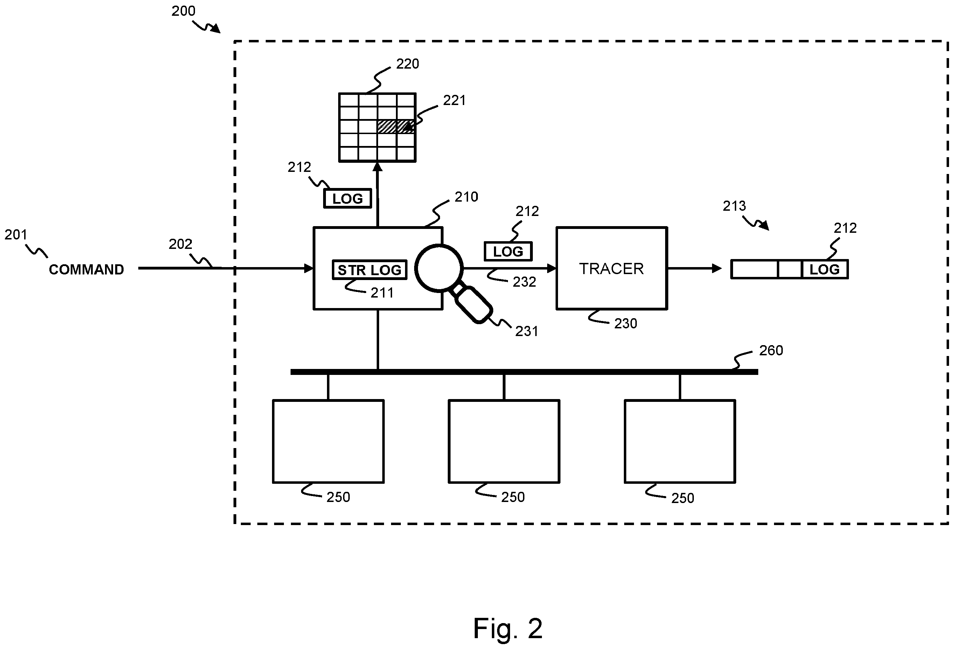

Fig. 2 shows an example embodiment of an integrated circuit 200 capable of tracing 231 instructions executed by at least one processing unit 210 according to example embodiments. As such, integrated circuit 200 can provide debugging features, e.g. logging, when implemented in the optical line terminal 110 shown in Fig. 1.

Integrated circuit 200 can comprise at least one processing unit 210 for executing instructions of at least one computer program. The computer program can for example be loaded into a program memory for execution by the processing unit 210. The computer program comprises at least one logging command 201 with at least one store instruction 211. The store instruction 211 can for example be fetched 202 from the program memory by the at least one processing unit 210 at the start of an instruction cycle. This store instruction instructs the at least one processing unit 210 to store logging data 212 within a predetermined memory region 221. The logging data can for example include, amongst others, an integer, a string, a character, a Boolean, or a combination thereof. The logging data can for example relate to, amongst others, an event or a transaction performed by processing unit 210 when executing a computer program, or a state of the computer program. The logging data 212 and/or the predetermined memory region 221 can be included in the at least one logging command 201 in the computer program. Alternatively, the predetermined memory region 221 can be provided to the at least one store instruction 221 when compiling the code of the computer program, e.g. by a compiler.

Integrated circuit 200 can further comprise one or more additional circuitries 250, electronic components 250, and/or subsystems 250 such as, for example, read only memory, ROM, random access memory, RAM, timers, counters, I/O ports, analogue to digital converters, and digital to analogue converters. The at least one processing unit 210 can be connected to these additional circuitries 250 by means of a shared bus 260.

The integrated circuit 200 further comprises at least one instruction tracer circuitry 230 such as, for example, an embedded trace macrocell, ETM. Such an instruction tracer circuitry 230 is respectively coupled to the processing unit 210 and is configurable for tracing instructions executed by the processing unit 210. The instruction tracer circuitry 230 is configured to specifically trace 231 store instructions 211 to a predetermined memory region 221.

The predetermined memory region can have at least one configurable address range. The instruction tracer circuitry 230 can thus be configured to trace the address range whereto the logging data 212 is stored when executing store instruction 211. As such, the logging data 212 can be stored to any memory region as long as the instruction tracer circuitry 230 is configured to trace said memory region, i.e. the predetermined memory region 221. The predetermined memory region 221 can further have a plurality of configurable address ranges. In other words, the predetermined memory region 221 can be distributed over a plurality of address ranges. These address ranges can include adjacent address ranges and nonadjacent address ranges.

The predetermined memory region 221 can be included in a memory 220 provided on the integrated circuit 200. The memory 200 can for example be, amongst others, a cache, a random-access memory, RAM, a static random-access memory, SRAM, a dynamic random-access memory, DRAM, or any other primary memory known to the skilled person. The processing unit 210 can write the logging data 212 to such a memory 200 via the shared bus 260. Preferably, memory 200 can be directly coupled to the at least one processing unit 210 with a guaranteed access time. In other words, the at least one processing unit 210 can access the memory 200 without using the shared bus 260. In particular, the memory 220 can be integrated on the at least one processing unit 210 and/or operate at a substantially similar frequency, i.e. clock speed. This allows storing the logging data 212 without a substantial impact on the performance of the at least one processing unit 210 as the directly coupled memory 220 can be accessed with low latency and reliability, i.e. without the unpredictability of cache memory. Such a directly coupled memory 220 can for example be a tightly-coupled memory, TCM. A directly coupled memory has the further advantage that the overhead in terms of instruction cycles is limited. Alternatively, the predetermined memory region 221 can be unallocated. In other words, the predetermined memory region 221 can be comprised in a virtual memory.

The instruction tracer circuitry 230 is configured to detect and intercept store instructions 211 to the predetermined memory region 221, when executed by processing unit 210. The instruction tracer circuitry 230 can thus non-intrusively monitor, i.e. observe, the store instructions to the predetermined memory region 221 executed by the processing unit 210. Upon intercepting such a store instruction, the instruction tracer circuitry 230 retrieves 232 the logging data 212 from the intercepted instruction 211. To this end, the instruction tracer circuitry 230 can be directly coupled to processing unit 210, e.g. by a direct physical connection such as one or more conductive tracks. In doing so, the at least one instruction tracer circuitry 230 can non-intrusively obtain the logging data from the processing unit 210. In other words, the processing unit 210, in particular the computer program being executed by processing unit 210, can be logged with limited impact on processor performance and execution time of the computer program. When the memory 220 is a directly coupled memory as mentioned above, the impact of the logging on the performance and execution time of the processing unit 210 will be minimal. It is an advantage that the logging is free of resource contention as the instruction tracer circuitry 230 is directly coupled to the at least one processing unit 210 and, thus, the logging data does not travel a shared bus 260.

Upon retrieving the logging data 212, the instruction tracer circuitry 230 generates a logging packet 213 comprising the logging data 212. Storing such generated logging packets 213 in time allows to provide additional debugging features, e.g. by analysing or postprocessing the packets 213.

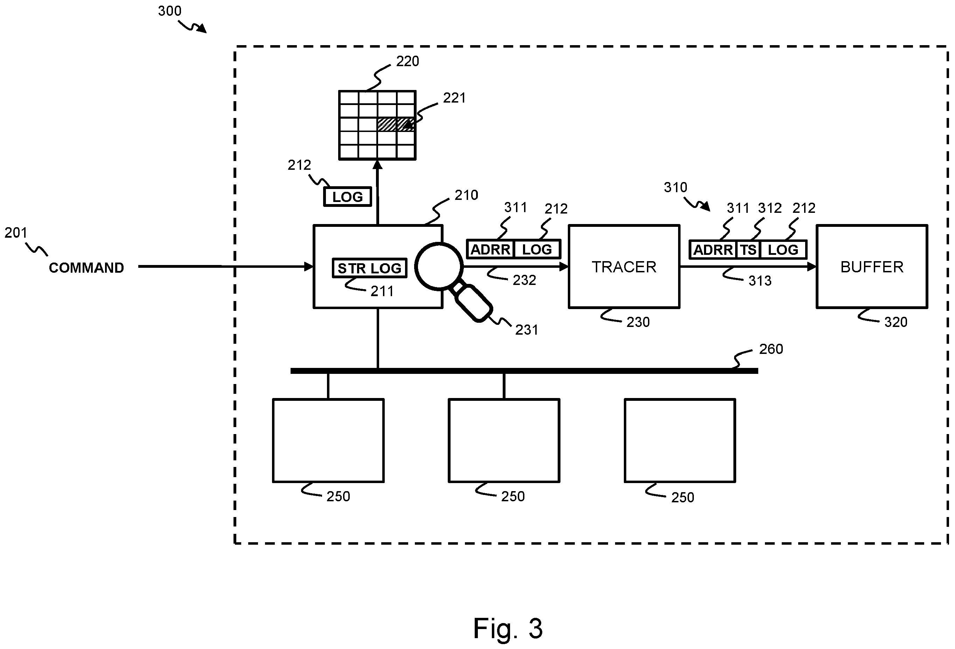

Fig. 3 shows an example embodiment of an integrated circuit 300 capable of storing logging packets 310 generated by instruction tracer circuitry 230 according to example embodiments. To this end, the integrated circuit 300 can comprise at least one debugging buffer circuitry 320. The debugging buffer circuitry 320 can be configured to store the logging packets 310 generated by the instruction tracer circuitry 230. The instruction tracer circuitry 230 can thus further be configured to forward 313 the generated logging packets 310 to the debugging buffer circuitry 320 for storage. The debugging buffer circuitry 320 can receive logging packets 310 from the instruction tracer circuitry 230 at a substantial faster rate than the rate at which the received logging packets 320 can be processed, e.g. by implementing a queue.

Preferably, the at least one instruction tracer circuitry 230 can further be configured to add a time reference 312 to the logging packet 310. In other words, a time reference 312 can be added to the logging packet 310 upon generation of the packet 310 by the instruction tracer circuitry 230. The time reference 312 can indicate the moment when the store instruction 211 is executed, fetched, or decoded by the processing unit 210. Alternatively, the time reference 312 can indicate the moment when the instruction tracer circuitry 230 intercepts the store instruction 211, retrieves the logging data 212, or generates the logging packet 310. The time reference 312 can for example be, amongst others, a date, a timestamp, or information on the instruction cycles of the processing unit 210. Such instruction cycle information can for example include, amongst others, an amount of completed instruction cycles, clock ticks, or wall-clock time of the processing unit 210.

The integrated circuit 300 can preferably comprise means configured to provide the time reference 312 to the instruction tracer circuitry 230. This allows offloading the time reference determination from the processing unit 210, thereby further reducing the impact of the logging on the performance and execution time of the processing unit 210. Alternatively, the computer program executed by processing unit 211 can provide the time reference 312 to the at least one instruction tracer circuitry 230. For example, by including or adding the time reference 312 in the logging data 212, i.e. the data stored within the predetermined memory region 221. In doing so, the instruction tracer circuitry 230 can retrieve 232 the time reference 312 from the intercepted store instruction 211.

Adding a time reference 312 to the logging packets 310 can further improve the logging by providing additional debugging features. For example, logging packets 310 stored in debugging buffer circuitry 320 can be removed from the buffer 320 when the associated time reference 312 reaches a certain retention limit, or the time reference 312 can be used to filter or sort the stored logging packets 310.

Preferably, the at least one instruction tracer circuitry 230 can further be configured to add a memory address 311 to the logging packet 310. In particular, memory address 311 is the memory address within the predetermined memory region 221 where the logging data 212 is stored when executing store instruction 211. The instruction tracer circuitry 230 can therefore further be configured to retrieve 232 the memory address 311 from the intercepted store instruction 211. In other words, in addition to retrieving the logging data 212 of the intercepted store instruction 211, the instruction tracer circuitry 230 can retrieve the memory address 311. Preferably, memory address 311 can be associated with the processing unit 210 and/or the executed computer program, i.e. the computer program that produced the store instruction 211. The memory address 311 can be included in the logging command of the executed computer program. Alternatively, the memory address 311 can be provided to the store instruction 211 when compiling the code of the computer program for execution on processing unit 210.

Adding the retrieved memory address 311 to the logging packets 310 can further improve the logging by providing additional debugging features. For example, the memory address 311 can be used to identify the computer program that produced the store instruction 211 if the memory address 311 is associated with a specific computer program.

The instruction tracer circuitry 230 can further be configured to interrupt and/or initiate the generating of succeeding logging packets 310 based on the logging data 212. In other words, the generation of logging packets 310 can be interrupted when the logging data 212 includes a predetermined argument, e.g. a predetermined integer, character, string, or Boolean. Herein, an argument refers to one or more input expressions passed or supplied to the store instruction 211 or the logging command 201, i.e. included in the logging data 212. The predetermined argument can for example be passed or supplied by a computer program. The code of the computer program can for example include a conditional statement that passes the predetermined argument to the store instruction 211 when a certain interrupt condition is fulfilled, thereby interrupting the generating of succeeding logging packets 310. Such an interrupt condition can for example relate to, amongst others, the remaining storage capacity of debugging buffer circuitry 320, the power consumption, or the utilization of processing unit 210. This has the further advantage that the logging can be interrupted when a certain condition is fulfilled.

Alternatively or complementary, the instruction tracer circuitry 230 can be configured to interrupt and/or initiate the forwarding 313 of generated logging packets 310 to the debugging buffer circuitry 320 based on the logging data 212. The instruction tracer circuitry 230 can thus stop and/or start forwarding 313 logging packets to the debugging buffer circuitry 320 after retrieving logging data 212 that includes a predetermined argument.

Alternatively or complementary, the instruction tracer circuitry 230 can be configured to interrupt and/or initiate the storing of forwarded logging packets 310 in the debugging buffer circuitry 320 based on the logging data 212. The debugging buffer circuitry 320 can thus stop and/or start storing forwarded logging packets 310 based on an instruction from the tracer circuitry 230. To this end, the instruction tracer circuitry 230 can be configured to instruct the debugging buffer circuitry 320 to stop and/or start storing logging packets 310. This can for example be achieved by including the instruction in the generated logging packet 310, by generating and forwarding an instruction packet, or by providing a control signal along a dedicated connection between the tracer circuitry 230 and the buffer circuitry 320, i.e. a connection different from connection 313 for forwarding logging packets 310. Alternatively, the storing of forwarded logging packets can be interrupted and/or initiated by means of an external processor.

The interruption can be temporary, e.g. for a necessary amount of time to read the logging packets. The interruption can be maintained until the instruction tracer circuitry 230 is instructed to re-initiate the generation of logging packets 310, the forwarding of generated logging packets 310, or the storing of forwarded logging packets 310. In other words, the interruption can be maintained until the tracer circuitry 230 is instructed to re-initiate the logging of logging data. This can for example be achieved by including another predetermined argument, i.e. a different predetermined argument, in the logging data 212. The re-initiating can also be triggered based on a certain condition, e.g. re-initiating when a minimum storage capacity of debugging buffer circuitry 230 becomes available again. Alternatively, the interruption only takes effect after a predetermined amount of logging packets 310 have been generated, forwarded, or stored. In other words, a predetermined amount of logging packets 310 may still be logged after meeting the interrupt condition, i.e. after retrieving the predetermined argument from the logging data 212. Alternatively or complementary, the generation of logging packets 310 can be initiated by including a predetermined argument in the logging data 212.

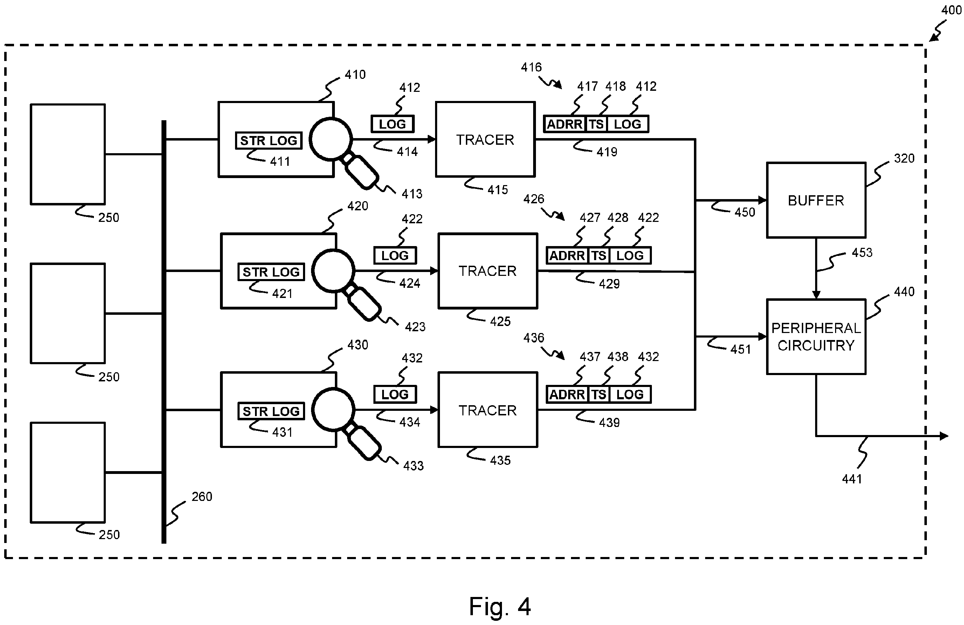

Fig. 4 shows an example embodiment of an integrated circuit 400 comprising a plurality of processing units 410, 420, 430 and a plurality of respective instruction tracer circuitries 415, 425, 435, according to embodiments. Each one of the respective processing units 410, 420, 430 can executed a plurality of computer programs. Each one of the respective instruction tracer circuitries 415, 425, 435 can be configured to intercept store instructions 411, 421, 431 executed by the respective processing units 410, 420, 430. The store instructions 411, 421, 431 can instruct the processing units 410, 420, 430 to store logging data 412, 422, 432 in a respective predetermined memory region. Preferably, the memory address within the predetermined memory region where the logging data 412, 422, 432 is stored can be associated with the respective processing unit 410, 420, 430 and/or the executed computer program.

Upon intercepting store instructions 411, 421, 431, the instruction tracer circuitries 415, 425, 435 can be configured to retrieve the respective logging data 412, 422, 432. Preferably, the memory address 417, 427, 437 can also be retrieved by the instruction tracer circuitries 415, 425, 435. The instruction tracer circuitries 415, 425, 435 can further be configured to add the retrieved memory address 417, 427, 437 and/or a time reference 418, 428, 438 to the generated logging packets 416, 426, 436. Alternatively, the logging packets 416, 426, 436 may comprise the retrieved logging data 412, 422, 432 without a time reference 418, 428, 438 or a memory address 417, 427, 437.

By the plurality of instruction tracer circuitries 415, 425, 435, a plurality of processing units 410, 420, 430 can be logged simultaneously on the integrated circuit 400. Integrated circuit 400 can thus allow to non-intrusively log a plurality of computer programs executed on a plurality of processing units 410, 420, 430. Additionally, adding the memory addresses 417, 427, 437 to the logging packets 416, 426, 436 can allow to associate logging data 412, 422, 432 to a specific computer program and a specific processing unit 410, 420, 430, e.g. during postprocessing of stored logging data.

The integrated circuit 400 can further comprise at least one debugging buffer circuitry 320 to store the generated logging packets 416, 426, 436. In other words, a debugging buffer circuitry 320 can be shared amongst a plurality of instruction tracer circuitries 415, 425, 435. To this end, the instruction tracer circuitries 415, 425, 435 can be configured to forward 450 the generated logging packets 416, 426, 436 to the shared buffer 320. This can allow a more efficient usage of silicon area on the integrated circuit 400. Alternatively, the logging packets 416, 426, 436 can be distributed among a plurality of debugging buffers 320, e.g. by providing a respective buffer 320 for each instruction tracer circuitry 415, 425, 435.

The integrated circuit 400 can further comprise at least one peripheral circuitry 440 for outputting 441 data from the integrated circuit 400. In particular, the data outputted by peripheral circuitry 440 can include the generated logging packets 416, 426, 436. The at least one peripheral circuitry 440 can be a communication interface such as, for example, a transceiver-like mechanism. The peripheral circuitry 440 can output or provide the logging packets 416, 426, 436 to an external component or system that is not included on the integrated circuit 400. The external component can for example be another integrated circuit such as, for example, a passive optical network card, an uplink card, or a debugger circuitry such as a trace port analyser, TPA. Alternatively, the external component can for example be a computing system such as a desktop, a laptop, or a compute server. Outputting 441 the logging packets allows further processing, monitoring, and/or inspecting of the generated logging packets 416, 426, 436.

The logging packets 416, 426, 436 can be forwarded 451 to the peripheral circuitry 440 by the instruction tracer circuitries 415, 425, 435, i.e. directly after being generated. Alternatively, the logging packets 416, 426, 436 can be forwarded 453 to the peripheral circuitry 440 by the debugging buffer circuitry 320. The debugging buffer circuitry 320 can be configured to forward 453 packages of one or more logging packets 416, 426, 436 to peripheral circuitry 440.

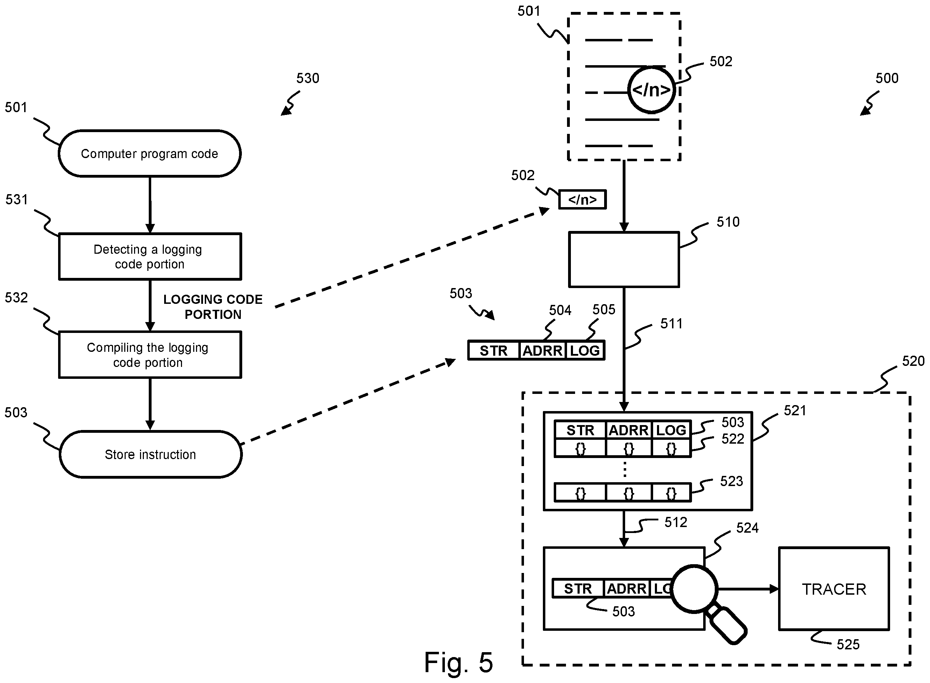

Fig. 5 shows steps 530 for generating instructions 503, 522, 523 from computer program code 501 for execution on an integrated circuit 520 according to embodiments. The instructions 503, 522, 523 can, but need not, be stored 511 in a program memory 521 before being fetched 512 for execution by the processing unit 524. The computer program code 501 can comprise one or more code portions written in, for example, a scripting language, an assembly language, a compiler language, an interpreter language, a system language, or any other programming language known to the skilled person. At least one code portion in the computer program code 501 can be a logging code portion 502. The logging code portion 502 can comprise statements and/or expressions for logging logging data.

In a first step 531, the at least one logging code portion 502 is detected in the computer program code 501. In a following step 532, the detected logging code portion is compiled to at least one store instruction 503 to store logging data 505 within a predetermined memory region. These steps 530 can for example be performed by a compiler 510 or an interpreter 510. In addition to the logging data 505, the logging code portion 502 can also include the predetermined memory region wherein the logging data 505 may be stored. Alternatively, the predetermined memory region can be provided to the store instruction 503 upon compiling of the logging code portion 502. In other words, the compiler or interpreter 510 can be configured to provide the store instruction 503 with the predetermined memory region that is traced by the instruction tracer circuitry 526.

Upon compiling the logging code portion 502 in step 532, the store instruction 503 can further be provided with a memory address 504 within the predetermined memory region that is associated with the computer program code 501, i.e. the computer program. The compiler or interpreter 510 can for example be configured to provide the memory address 504 to store instruction 503.

The predetermined memory region that is monitored by the instruction tracer circuitry 525 can thus be divided into regions, i.e. address ranges, wherein distinct computer programs can store logging data 505. In doing so, the computer program that produced the logging data 505, i.e. the computer program code 501 that included the logging code portion 502, can be identified based on the memory address 504. It is thus an advantage that a plurality of computer programs can identifiably be logged by the instruction tracer circuitry 525, as each memory address 504 within the predetermined memory region can be associated with a specific computer program. It is a further advantage that logging data 505 of different computer programs can be stored in a shared buffer as the stored logging data 505, i.e. the logging packets, can be associated with a specific computer program.

The memory address 504 can further be associated with a logging level. The logging level, i.e. log severity, can relate to the relative importance or urgency of the logging data 505. Logging levels can, for example, label the logging data 505 with "info", "warn", "error", or "fatal", to indicate the severity of the generated logging packet. The logging level can for example be included in the logging code portion 502 and converted to a specific memory address 504 upon compiling the logging code portion 502 in step 532. As such, adding a logging level to the logging data 505 can be offloaded from the processing unit 521. This can result in a reduced impact of the logging on the performance and execution time of the processing unit 521. It is a further advantage that logging levels can allow filtering of the logging data 505 or logging packets, e.g. upon inspection of the logging data 505 or packets, and can allow providing an alert, e.g. when a certain action is required.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

As used in this application, the term "circuitry" may refer to one or more or all of the following: (a) hardware-only circuit implementations (such as implementations in only analogue and/or digital circuitry) and (b) combinations of hardware circuits and software, such as (as applicable): (i) a combination of analogue and/or digital hardware circuit(s) with software/firmware and (ii) any portions of hardware processor(s) with software (including digital signal processor(s)), software, and memory(ies) that work together to cause an apparatus to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware.

## Claims

1. An integrated circuit (200) comprising at least one processing unit (210) for executing instructions of at least one computer program; the at least one computer program comprising at least one logging command (201) with at least one store instruction (211) to store logging data (212) within a predetermined memory region (221); the integrated circuit (200) further comprising at least one instruction tracer circuitry (230) configurable for tracing (231) instructions executed by the at least one processing unit, and respectively coupled to the at least one processing unit; and wherein the at least one instruction tracer circuitry is configured to:
- intercept the at least one store instruction (211) to the predetermined memory region (221) when executed by the at least one processing unit (210);
- retrieve (232) the logging data (212) from the intercepted store instruction (211); and
- generate a logging packet (213) comprising the logging data (212).

2. The integrated circuit according to claim 1, wherein the at least one instruction tracer circuitry (230) is further configured to add a time reference (312) to the logging packet (310).

3. The integrated circuit according to any of the preceding claims, wherein the at least one instruction tracer circuitry (230) is further configured to retrieve a memory address (311) within the predetermined memory region from the intercepted store instruction (211), and to add the retrieved memory address to the logging packet (310).

4. The integrated circuit according to any of the preceding claims, wherein the at least one instruction tracer circuitry (230) is further configured to interrupt and/or initiate the generating of logging packets (310) based on the logging data (212).

5. The integrated circuit according to any of the preceding claims, further comprising at least one debugging buffer circuitry (320) configured to store the logging packet (310), and wherein the at least one instruction tracer circuitry (230) is further configured to forward (313) the logging packet (310) to the at least one debugging buffer circuitry (320).

6. The integrated circuit according to claim 5, wherein the at least one instruction tracer circuitry (230) is further configured to interrupt and/or initiate the forwarding and/or storing of logging packets (310) based on the logging data (212).

7. The integrated circuit according to claim 5, further comprising a plurality of instruction tracer circuitries (410, 420, 430) and wherein the at least one debugging buffer circuitry (320) is further configured to store logging packets (416, 426, 436) that are forwarded (450) by the plurality of instruction tracer circuitries.

8. The integrated circuit according to claim 5, further comprising at least one peripheral circuitry (440) for outputting (441) data from the integrated circuit (400), and wherein the at least one instruction tracer circuitry (410, 420, 430) and/or the at least one debugging buffer circuitry (320) are further configured to forward (451, 453) the logging packet (416, 426, 436) to the at least one peripheral circuitry.

9. The integrated circuit according to any of the preceding claims, wherein the predetermined memory region (221) has at least one configurable address range.

10. The integrated circuit according to any of the preceding claims, further comprising a memory (220) including the predetermined memory region (221), wherein the memory (220) is directly coupled to the at least one processing unit (210) with a guaranteed access time.

11. The integrated circuit according to any of claims 1-9, wherein the predetermined memory region is unallocated.

12. A method for tracing instructions executed on an integrated circuit comprising at least one processing unit for executing instructions of at least one computer program; the at least one computer program comprising at least one logging command with at least one store instruction to store logging data within a predetermined memory region; the integrated circuit further comprising at least one instruction tracer circuitry configurable for tracing instructions executed by the at least one processing unit, and respectively coupled to the at least one processing unit; the method comprising, by the at least one instruction tracer circuitry:
- intercepting the at least one store instruction to the predetermined memory region when executed by the at least one processing unit;
- retrieving the logging data from the intercepted store instruction; and
- generating a logging packet comprising the logging data.

13. A method for generating instructions (503, 522, 523) for execution on the integrated circuit (520) according to any one of claims 1 - 11 from computer program code (501); the computer program code comprising at least one logging code portion (502) for logging logging data (505); the method comprising:
- detecting (531) the at least one logging code portion (502) in the computer program code (501); and
- compiling (532) the detected logging code portion to at least one store instruction (503) to store the logging data (505) within the predetermined memory region.

14. The method according to claim 13, wherein the store instruction (503) comprises a memory address (504) within the predetermined memory region that is associated with the computer program code (501).

15. The method according to claim 13, wherein the store instruction (503) comprises a memory address (504) within the predetermined memory region that is associated with a logging level.
